# EUROPÄISCHE PATENTSCHRIFT

(11) **EP 2 225 994 B1**
(45) Veröffentlichungstag und Bekanntmachung des Hinweises auf die Patenterteilung: **25.02.2015**
(21) Anmeldenummer: 09014879.2
(22) Anmeldetag: 01.12.2009
(51) Int. Cl.: A47L 11/164, A47L 11/40, A46B 13/00, A46D 3/00, B29L 31/00, B29C 65/16, B29C 65/00, B29K 23/00

(54) **Treibscheibe für Bodenreinigungsmaschinen**
Drive disc for floor cleaning machines
Disque d'entraînement pour machines de nettoyage du sol

(30) Priorität: 06.03.2009 DE 102009013151
(43) Veröffentlichungstag der Anmeldung: 08.09.2010
(73) Patentinhaber: Süddeutsche Bürsten- und Kunststoffabrik Eugen Gutmann GmbH, 71229 Leonberg (DE)
(72) Erfinder: Belle, Jürgen, 74379 Ingersheim (DE)
(74) Vertreter: DREISS Patentanwälte PartG mbB

(56) Entgegenhaltungen:
- DE-A1- 4 101 213
- DE-A1-102004 030 619
- DE-U1- 9 311 391
- US-A1- 2006 143 843
- JONES I A ET AL: "USE OF INFRARED DYES FOR TRANSMISSION LASER WELDING OF PLASTICS", SOCIETY OF PLASTICS ENGINEERS. ANNUAL TECHNICAL CONFERENCE (ANTEC). PROCEEDINGS, SOCIETY OF PLASTICS ENGINEERS, US, 1. Januar 2000 (2000-01-01), Seiten 1166-1170, XP000952346, ISSN: 1539-2252

## Beschreibung

Die Erfindung betrifft eine Treibscheibe, auch Treibteller genannt, für Bodenreinigungsmaschinen zur Anordnung von insbesondere Reinigungs- oder Polier-Pads, mit wenigstens einem an der Unterseite der Treibscheibe vorgesehenen Haftbelag, insbesondere in Form einer Häkchenplatte.

Derartige Treibscheiben sind aus dem vorbekannten Stand der Technik in vielfacher Art und Weise vorbekannt. Zur Reinigung von insbesondere Industrieböden oder großflächigen sonstigen Böden können Ein- oder Mehrscheibenmaschinen Verwendung finden. Je nach zu reinigendem Boden und/oder je nach Verschmutzungsgrad können dabei unterschiedliche Reinigungs- oder Polierpads an der jeweiligen Treibscheibe der Reinigungsmaschine vorgesehen sein. Als Haftbelag zur Befestigung der Pads finden meist sogenannte Häkchenplatten Verwendung, welche auf der Unterseite der Treibscheibe befestigt sind. Die Häkchenplatte weist dabei Widerhaken auf, mittels welchen die zumindest auf der der Häkchenplatte zugewandten Seite schlaufenartig ausgebildeten Pads an der Treibscheibe gehalten werden.

Bei derartigen Treibscheiben ist insbesondere wichtig, dass die Häkchenplatte dauerhaft fest an der Treibscheibe angeordnet ist. Zum einen wirken im Betrieb der Treibscheibe nicht unwesentliche Kräfte über das Pad auf die Häkchenplatte beziehungsweise die Treibscheibe. Zum anderen wirken beim Abnehmen des Pads senkrecht zur Ebene der Häkchenplatte verlaufende Kräfte auf die Häkchenplatte. Es muss folglich gewährleistet sein, dass die Häkchenplatte derart an der Treibscheibe angeordnet ist, dass zum einen Kräfte in der Ebene der Häkchenplatte sowie senkrecht zur Ebene der Häkchenplatte auf die Häkchenplatte wirken können, ohne dass sich diese von der Treibscheibe ablöst.

Gemäß dem vorbekannten Stand der Technik können die Haftbeläge dabei auf der Treibscheibe durch Kleben befestigt sein. Dabei hat sich die Wahl eines geeigneten Klebstoffs als problematisch herausgestellt. In der Praxis werden deshalb häufig die Haftbeläge mittels unterschiedlicher Befestigungsmethoden an der Treibscheibe befestigt. So ist beispielsweise in der DE 41 01 213 A1 ein Padhalter für eine Bodenreinigungsmaschine bekannt, bei welchem die Haken der Häkchenplatte strahlenförmig in radialen Reihen angeordnet sind. Dieser Padhalter wird am Halteteller der Bodenreinigungsmaschine mit Hilfe eines Doppel-Klebebandes befestigt. Von Jones ist aus dem Artikel "Use of infrared dyes for transmission laser welding of plastics", Proceedings, Society of Plastics Engineers, 1. Januar 2000 ein Verfahren zum Laserschweißen von Kunststoffmaterialien bekannt. Dieses Verfahren erlaubt das Verschweißen von zwei ähnlich klaren Kunststoffen mit einer minimal sichtbaren Schweißnaht (auch als sogenanntes ClearWeld-Verfahren bekannt).

Keines dieser Verfahren
- Kleben mit Flüssigklebstoff
- Kleben mit doppelseitigem Klebeband
- Klammern
- Kleben und Klammern
- Verschrauben
hat sich in der Praxis allerdings als optimal herausgestellt. Trotz aufwändigem und teuerem Fügeverfahren lösen sich die Halteplatten nach bisherigem Stand der Technik zumindest in Teilbereichen von der Treibscheibe und bilden so lose Stellen, die von Reinigungsflüssigkeit und Feuchtigkeit unterspült werden. Dies kann im Extremfall zur Ablösung des Haftbelags von der Treibscheibe führen. Insbesondere können Keimnester entstehen, welche gerade bei der Reinigung von Böden in Kliniken oder Krankenhäusern kritisch sind.

Der vorliegenden Erfindung liegt deshalb die Aufgabe zugrunde, eine Treibscheibe bereitzustellen, welche die genannten Nachteile nicht aufweist und bei welcher der Haftbelag auf vorteilhafte Weise an der Treibscheibe anordenbar ist.

Diese Aufgabe wird gelöst durch eine Treibscheibe mit den Merkmalen des Patentanspruchs 1. Eine solche Treibscheibe zeichnet sich also dadurch aus, dass der Haftbelag beziehungsweise die Treibscheiben aus einem Laserstrahlen durchlässigen Kunststoffmaterial und die Treibscheibe beziehungsweise der Haftbelag aus einem Laserstrahlen absorbierenden Kunststoffmaterial gebildet sind, wobei der Haftbelag wenigstens abschnittsweise mit der Treibscheibe laserverschweißt ist. Das Laserverschweißen des Haftbelags mit der Treibscheibe hat den Vorteil, dass kein zusätzliches, weiteres Material zwischen den Haftbelag und die Treibscheibe einzubringen ist. Es findet folglich kein Klebstoff und/oder Doppelklebeband Verwendung, um den Haftbelag an der Treibscheibe dauerhaft zu befestigen. Dies stellt nicht nur einen technischen, sondern auch einen wirtschaftlichen Nutzen dar. Insbesondere an den Bereichen, welche laserverschweißt sind, kann keine Feuchtigkeit zwischen den Haftbelag und die Treibscheibe eindringen, wodurch hier die Bildung von Keimnestern zwischen dem Haftbelag und der Treibscheibe unterbunden werden kann. Zudem entfällt ein teurer und umweltbelastender Klebstoff.

Dadurch, dass insbesondere der Haftbelag aus einem Laserstrahlen durchlässigen Kunststoffmaterial und insbesondere die Treibscheibe aus einem Laserstrahlen absorbierenden Kunststoffmaterial gebildet sind, können beim Schweißvorgang die Laserstrahlen durch die Häkchenplatte hindurchdringen und werden erst von der dem Haftbelag zugewandten Seite der Treibscheibe absorbiert. Im Grenzbereich zwischen der Treibscheibe und dem Haftbelag wird folglich zumindest das Material der Treibscheibe aufgeschmolzen, welche sich mit dem Material des Haftbelags dauerhaft verbindet. Je nach Wahl des Materials des Haftbelags und/oder der Energiedichte des Laserstrahls kann zudem vorgesehen sein, dass aufgrund der Temperaturentwicklung auch das Material des Haftbelags auf der der Treibscheibe zugewandten Seite mit aufgeschmolzen wird. Selbstverständlich kann auch die Treibscheibe aus einem Laserstrahlen durchlässigen Material und der Haftbelags aus einem Laserstrahlen absorbierenden Material sein.

Die erwähnte Art des Laserverschweißens hat zudem den Vorteil, dass die der Treibscheibe abgewandte Oberseite des Haftbelags durch das Verschweißen nicht beschädigt, verändert oder sonst beeinträchtigt wird, da das jeweilige Material lediglich im Grenzbereich zwischen Haftbelag und Treibscheibe aufgeschmolzen wird.

Vorteilhafterweise ist vorgesehen, dass der Haftbelag an den Randbereichen entlang einer wenigstens weitgehend geschlossenen Linie mit der Treibscheibe laserverschweißt ist. Aufgrund des Verschweißens entlang einer geschlossenen Linie kann gewährleistet werden, dass keine Reinigungsflüssigkeit zwischen den Haftbelag und die Treibscheibe gelangen kann.

Dabei ist vorteilhaft, wenn der Haftbelag ringförmig mit einem inneren Randbereich und einem äußeren Randbereich ausgebildet ist, wobei der Haftbelag entlang des inneren Randbereichs und entlang des äußeren Randbereichs mit der Treibscheibe jeweils entlang einer geschlossenen Linie laserverschweißt ist. Vorzugsweise verlaufen die beiden geschlossenen Linien, entlang denen die Laserverschweißung vorgesehen ist, entlang zwei konzentrisch zueinander angeordneten Kreisbahnen. Eine Kreisbahn verläuft entlang dem äußeren Randbereich des Haftbelags und eine weitere Kreisbahn entlang des inneren Randbereichs des Haftbelags.

Zudem kann vorgesehen sein, dass der Haftbelag Aussparungen und/oder Durchbrüche aufweist, wobei der Haftbelag in dem die Aussparungen und/oder Durchbrüche umgebenden Bereichen ebenfalls entlang einer geschlossenen Linie mit der Treibscheibe laserverschweißt ist. Dadurch wird gewährleistet, dass auch in diesen Bereichen keine Feuchtigkeit zwischen den Haftbelag und die Treibscheibe gelangen kann.

Der Haftbelag selbst kann insbesondere aus einem hochmodifizierten Polypropylen hergestellt sein. Die Treibscheibe als solche kann insbesondere aus einem Polypropylen-Homopolymer hergestellt sein. Es hat sich gezeigt, dass derartige Kunststoffe vorteilhafterweise die an die Treibscheibe beziehungsweise an den Haftbelag zu stellenden Anforderungen erfüllen und zudem laserverschweißbar sind.

Der Haftbelag selbst wird vorzugsweise gebildet von einer eine wenigstens weitgehend konstante Dicke aufweisenden Grundplatte und von auf der Grundplatte vorhandenen Widerhäkchen. Die Widerhäkchen können dabei im Längsschnitt hakenartig oder pilzkopfartig, also in einander abgewandter Richtung doppelhakenförmig, ausgebildet sein.

Weitere Einzelheiten und vorteilhafte Ausgestaltungen der Erfindung sind der folgenden Beschreibung zu entnehmen, anhand derer ein Ausführungsbeispiel der Erfindung näher beschrieben und erläutert ist.

### Es zeigen:

- Figur 1: eine perspektivische Draufsicht auf eine Treibscheibe samt Pads; und
- Figur 2: einen Ausschnitt der Unteransicht der Treibscheibe gemäß Figur 1.

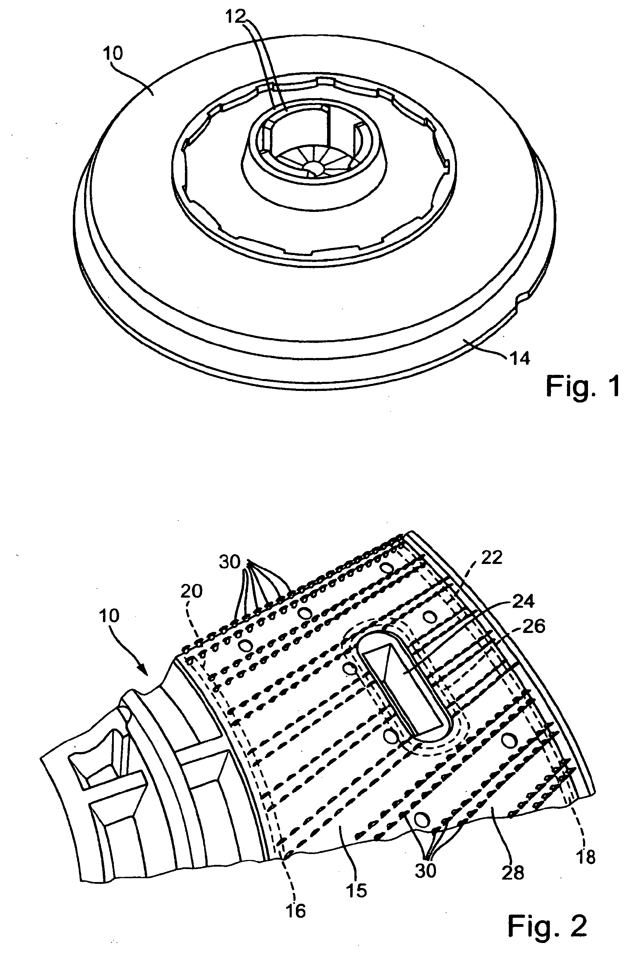

Die in der Figur 1 dargestellte Treibscheibe 10 ist aus einem Polypropylen-Homopolymer hergestellt und weist im radial inneren Bereich einen Anschlussflansch 12 zur Befestigung der Treibscheibe 10 an einer Bodenreinigungsmaschine auf.

Auf der Unterseite der Treibscheibe 10 ist ein aus Schlaufen bildenden Fasern hergestelltes Pad 14 angeordnet.

In der Figur 2, die die Unterseite des kreissegmentförmigen Ausschnitts der Treibscheibe 10 zeigt, wird deutlich, dass an der Treibscheibe 10 ein Haftbelag in Form einer Häkchenplatte 15 angeordnet ist. Die Häkchenplatte 15 ist dabei aus einem Laserstrahlen durchlässigen Kunststoffmaterial, insbesondere aus einem hochmodifizierten Polypropylen. Die Treibscheibe 10 ist aus einem Laserstrahlen absorbierenden Polypropylen-Homopolymer gebildet. Zur dauerhaften Befestigung der Häkchenplatte an der Treibscheibe ist die Häkchenplatte 15 mit der Unterseite der Treibscheibe 10 im Grenzbereich zwischen der Häkchenplatte 15 und der Treibscheibe 10 laserverschweißt.

Wie aus Figur 2 deutlich wird, ist die Häkchenplatte 15 ringförmig mit einem inneren Randbereich 16 und einem äußeren Randbereich 18 ausgebildet. Dabei verläuft entlang des inneren Randbereichs 16 eine geschlossene Schweißnaht 20. Entsprechend verläuft entlang des äußeren Randbereichs 18 eine geschlossene, gestrichelt angedeutete Schweißnaht 22. Die Schweißnähte 20 und 22 sind dabei umlaufend entlang einer jeweiligen Kreisbahn verlaufend vorgesehen. Aufgrund des Verschweißens der Häkchenplatte 15 mit der Treibscheibe 10 entlang der beiden geschlossenen Linien 20, 22 wird verhindert, dass beim Reinigungsvorgang Feuchtigkeit oder Reinigungsflüssigkeit in den Bereich zwischen der Häkchenplatte 15 und der Treibscheibe 12 gelangen kann.

Wie aus Figur 2 ferner deutlich wird, weist die Häkchenplatte 15 eine Aussparung 24 auf. Die Aussparung 24 umgibt dabei eine Ausnehmung in der Unterseite der Treibscheibe 10. Die Häkchenplatte 15 ist in dem die Aussparung 24 umgebenden Bereich entlang einer geschlossenen Schweißnaht 26, die gestrichelt angedeutet ist, laserverschweißt. Auch hierdurch wird unterbunden, dass Feuchtigkeit über die Aussparung 24 in den Bereich zwischen der Häkchenplatte 15 und der Treibscheibe 10 gelangen kann.

Die Häkchenplatte 15 selbst besteht aus einer eine konstante Dicke aufweisenden Grundplatte 28 und von auf der Grundplatte 28 vorhandenen Widerhaken 30. Die Widerhaken 30 können dabei im Längsschnitt hakenartig oder pilzkopfartig, das heißt doppelhakenartig, ausgebildet sein. Auf alle Fälle sind die Widerhaken derart ausgebildet, dass eine insbesondere klettverschlussartige Befestigung des Pads 14 an der Häkchenplatte 15 möglich ist.

## Patentansprüche

1. Treibscheibe (10) für Bodenreinigungsmaschinen zur Anordnung von insbesondere Reinigungs- oder Polier-Pads (14), mit wenigstens einem an der Unterseite der Treibscheibe (10) vorgesehenen Haftbelag (15), **dadurch gekennzeichnet, dass** der Haftbelag(15) und im anderen Fall die Treibscheibe (10) aus einem Laserstrahlen durchlässigen Kunststoffmaterial und die Treibscheibe (10) und im anderen Fall der Haftbelag (15) aus einem Laserstrahlen absorbierenden Kunststoffmaterial gebildet sind, wobei der Haftbelag (15) wenigstens abschnittsweise mit der Treibscheibe (10) laserverschweißt ist und wobei der Haftbelag (15) an den Randbereichen (16, 18) entlang einer wenigstens weitgehend geschlossenen Linie (20, 22) mit der Treibscheibe (10) laserverschweißt ist.

2. Treibscheibe (10) nach Anspruch 1, **dadurch gekennzeichnet, dass** der Haftbelag (15) ringförmig mit einem inneren Randbereich (16) und einem äußeren Randbereich (18) ausgebildet ist, wobei der Haftbelag (15) entlang des inneren Randbereichs (16) und entlang des äußeren Randbereichs (18) mit der Treibscheibe (10) jeweils entlang einer geschlossenen Linie (20, 22) laserverschweißt ist.

3. Treibscheibe (10) nach Anspruch 1 oder 2, **dadurch gekennzeichnet, dass** der Haftbelag (15) Aussparungen und/oder Durchbrüche (24) aufweist, wobei der Haftbelag (15) in den die Aussparungen und/oder Durchbrüche (24) umgebenden Bereichen entlang einer geschlossenen Linie (26) mit der Treibscheibe (10) laserverschweißt ist.

4. Treibscheibe (10) nach wenigstens einem der vorherigen Ansprüche, **dadurch gekennzeichnet, dass** die Treibscheibe (10) aus einem Laserstrahlen absorbierenden Polypropylen-Homopolymer hergestellt ist.

5. Treibscheibe (10) nach wenigstens einem der vorherigen Ansprüche, **dadurch gekennzeichnet, dass** der Haftbelag (15) von einer eine wenigstens weitgehend konstante Dicke aufweisenden Grundplatte (28) und von auf der Grundplatte vorhandenen Widerhäkchen (30) gebildet wird.

6. Treibscheibe (10) nach Anspruch 5, **dadurch gekennzeichnet, dass** die Widerhäkchen (30) im Längsschnitt hakenartig oder pilzkopfartig ausgebildet sind.

## Claims

1. Drive disc (10) for floor-cleaning machines, for the attachment in particular of cleaning or polishing pads (14), with at least one adhesive coating (15) provided on the underside of the drive disc (10), **characterized in that** the adhesive coating (15) and otherwise the drive disc (10) is formed from a plastic material which is permeable to laser beams, and the drive disc (10) and otherwise the adhesive coating (15) is formed from a plastic material which absorbs laser beams, wherein the adhesive coating (15) is laser-welded to the drive disc (10) at least in portions, and wherein the adhesive coating (15) is laser-welded to the drive disc (10) along an at least largely solid line (20, 22) at the peripheral regions (16, 18).

2. Drive disc (10) according to claim 1, **characterised in that** the adhesive coating (15) is formed annular with an inner edge region (16) and an outer edge region (18), wherein the adhesive coating (15) is laser-welded to the drive disc (10) in each case along a solid line (20, 22) along the inner edge region (16) and along the outer edge region (18).

3. Drive disc (10) according to claim 1 or 2, **characterised in that** the adhesive coating (15) comprises cutouts and/or openings (24), wherein the adhesive coating (15) is laser-welded to the drive disc (10) along a solid line (26) in the regions surrounding the cutouts and/or openings (24).

4. Drive disc (10) according to at least one of the preceding claims, **characterised in that** the drive disc (10) is made from a polypropylene homopolymer which absorbs laser beams.

5. Drive disc (10) according to at least one of the preceding claims, **characterised in that** the adhesive coating (15) is formed by a base plate (28) having an at least largely constant thickness, and from barbs (30) present on the base plate.

6. Drive disc (10) according to claim 5, **characterised in that** the barbs (30) are formed hook-like or mushroom-like in longitudinal section.

## Revendications

1. Disque d'entraînement (10) pour des machines de nettoyage du sol, pour l'agencement en particulier de patins de nettoyage ou polissage (14), comportant au moins un revêtement adhésif (15) prévu sur la face inférieure du disque d'entraînement (10), **caractérisé en ce que** le revêtement adhésif (15) et, dans l'autre cas, le disque d'entraînement (10) sont réalisés dans une matière plastique laissant passer les rayons laser, et le disque d'entraînement (10) et, dans l'autre cas, le revêtement adhésif (15) sont réalisés dans une matière plastique absorbant les rayons laser, le revêtement adhésif (15) étant soudé par laser au moins par zones avec le disque d'entraînement (10), et le revêtement adhésif (15), dans les zones de bordure (16, 18), étant soudé par laser avec le disque d'entraînement (10) le long d'une ligne (20, 22) fermée au moins en majeure partie.

2. Disque d'entraînement (10) selon la revendication 1, **caractérisé en ce que** le revêtement adhésif (15) est réalisé sous forme annulaire avec une zone de bordure intérieure (16) et une zone de bordure extérieure (18), le revêtement adhésif (15), le long de la zone de bordure intérieure (16) et le long de la zone de bordure extérieure (18), étant soudé par laser avec le disque d'entraînement (10) respectivement le long d'une ligne (20, 22) fermée.

3. Disque d'entraînement (10) selon la revendication 1 ou 2, **caractérisé en ce que** le revêtement adhésif (15) comporte des évidements et/ou des percées (24), le revêtement adhésif (15), dans les zones entourant les évidements et/ou les percées (24), étant soudé par laser avec le disque d'entraînement (10) le long d'une ligne (26) fermée.

4. Disque d'entraînement (10) selon au moins l'une quelconque des revendications précédentes, **caractérisé en ce que** le disque d'entraînement (10) est réalisé dans un polypropylène homopolymère absorbant les rayons laser.

5. Disque d'entraînement (10) selon au moins l'une quelconque des revendications précédentes, **caractérisé en ce que** le revêtement adhésif (15) est formé par une plaque de base (28) ayant une épaisseur constante au moins en majeure partie et par des ergots (30) présents sur la plaque de base.

6. Disque d'entraînement (10) selon la revendication 5, **caractérisé en ce que** les ergots (30), sur une coupe longitudinale, sont réalisés en forme de crochets ou en forme de champignons.
